# EUROPÄISCHE PATENTSCHRIFT

(11) **EP 3 529 817 B1**
(45) Veröffentlichungstag und Bekanntmachung des Hinweises auf die Patenterteilung: **16.09.2020**
(21) Anmeldenummer: 17777583.0
(22) Anmeldetag: 29.09.2017
(51) Int. Cl.: H01H 9/54, H02H 3/08

(54) **NIEDERSPANNUNGS-SCHUTZSCHALTGERÄT**
LOW-VOLTAGE CIRCUIT BREAKER DEVICE
DISJONCTEUR BASSE TENSION

(30) Priorität: 21.10.2016 DE 102016120070
(43) Veröffentlichungstag der Anmeldung: 28.08.2019
(73) Patentinhaber: Eaton Intelligent Power Limited, Dublin 4 (IE)
(72) Erfinder: ASKAN, Kenan, Vienna 1090 (AT)
(74) Vertreter: Eaton IP Group EMEA
(86) Internationale Anmeldenummer: PCT/EP2017/074910
(87) Internationale Veröffentlichungsnummer: WO 2018/072983

(56) Entgegenhaltungen:
- EP-A1- 2 523 204
- EP-A1- 3 010 030
- US-A1- 2015 022 928
- US-B1- 9 634 476

## Beschreibung

Die Erfindung betrifft ein Niederspannungs-Schutzschaltgerät gemäß dem Oberbegriff des Patentanspruches 1.

Es ist ein entsprechendes Schutzschaltgerät aus der WO 2015/028634 A1 der Anmelderin bekannt. Beim Ausschalten des Schutzschaltgeräts wird dabei erst der Bypassschalter geöffnet, wobei ein Lichtbogen entsteht, und der Strom auf die Halbleiterschaltungsanordnung kommutiert. Nachfolgend wird die, zuvor eingeschaltete, Halbleiterschaltungsanordnung ausgeschaltet und die Trennkontakte zum Bereiststellen der galvanischen Trennung, welche Trennkontakte in Serie zum Bypassschalter geschaltet sind, werden geöffnet.

Diese Trennkontakte sind erforderlich um Leckströme über die Halbleiterschaltungsanordnung im ausgeschalteten Zustand zu verhindern. Diese Trennkontakte führen im eingeschalteten Betrieb jedoch zu einem erheblichen Widerstand des betreffenden Schaltgeräts, und entsprechend zu einer hohen Verlustleistung und Eigenerwärmung des Schaltgeräts. Neben den beiden seriellen Schaltkontaktpaaren wird der Widerstand auch durch die erforderliche Verkabelung sowie die entsprechenden Kontaktstellen erhöht. Durch diese Widerstände wird der Nennstrom derartiger Schaltgeräte begrenzt, bzw. führt dies zu einer Erhöhung der Baugröße bei hohen geforderten Nennströmen. Da die betreffenden Kontakte ständig stromdurchflossen sind, müssen diese auch entsprechend hochwertig ausgebildet sein, wobei jedoch ein elektrischer Widerstand an dieser Stele nicht vermieden werden kann. Die Eigenerwärmung im permanenten Betrieb sorgt für eine verringerte Lebensdauer der Halbleiter.

Die EP 2 523 204 A1 beschreibt ein Schaltgerät für DC-Anwendungen, bei welchem ein passiver Resonanzkreis mittels eines Schalters parallel zu einer Schaltstrecke zugeschaltet werden kann. Der Schalter gemäß der EP 2 523 204 A1 unterscheidet sich dabei erheblich von einem hybriden Schaltgerät gemäß der bereits angeführten WO 2015/028634 A1.

Aus der EP 3 010 030 A1 geht ebenfalls ein Schaltgerät für DC-Anwendungen hervor. Allerdings ist bei diesem Schaltgerät die Halbleiterschaltungsanordnung 22 seriell zu dem Schalter 21 angeordnet. Parallel zu dieser Anordnung ist ein Netzwerk aus Sicherungen und Varistoren geschaltet. Diese Anordnung weist erhebliche konzeptionelle Unterschiede zu einem gegenständlichen Schaltgerät bzw. einem hybriden Schaltgerät gemäß der WO 2015/028634 A1 auf.

Die US 9 634 476 B1 beschreibt ein hybrides Schaltgerät mit zwei Schaltern im parallelen Halbleiterschaltungszweig.

Die US 2015/0022928 A1 offenbart ebenfalls ein hybrides SC-Schutzschaltgerät mit deutlich unterschiedlichem Aufbau.

Aufgabe der Erfindung ist es daher ein Schutzschaltgerät der eingangs genannten Art anzugeben, mit welcher die genannten Nachteile vermieden werden können, welches eine geringe Baugröße aufweist, welches hohe Nenn- bzw. Dauerströme ermöglicht, welches ein hohes Abschaltvermögen aufweist und über eine lange Zeit eine hohe Zuverlässigkeit aufweist.

Erfindungsgemäß wird dies durch die Merkmale des Patentanspruches 1 erreicht.

Dadurch kann ein Schutzschaltgerät gebildet werden, welches einen geringen

Innenwiderstand aufweist, wodurch selbst bei hoher Dauerstrombelastung die Eigenerwärmung des Schutzschaltgeräts gering bleiben. Durch die geringe Erwärmung kann auch die Baugröße des Schutzschaltgeräts gering gehalten werden. Aufgrund der geringen Eigenerwärmung des Schutzschaltgeräts können die Innentemperaturen gering gehalten werden, wodurch die Lebensdauer der Halbleiter in dem Schutzschaltgerät und die Zuverlässigkeit vergrößert wird.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein erstes Schutzschaltgerät gemäß dem Stand der Technik;
Fig. 2 ein zweites Schutzschaltgerät gemäß dem Stand der Technik;
Fig. 3 eine erste Ausführungsform einer Schaltstrecke eines gegenständlichen Schutzschaltgeräts;
Fig. 4 eine zweite Ausführungsform einer Schaltstrecke eines gegenständlichen Schutzschaltgeräts; und
Fig. 5 eine dritte Ausführungsform einer Schaltstrecke eines gegenständlichen Schutzschaltgeräts.

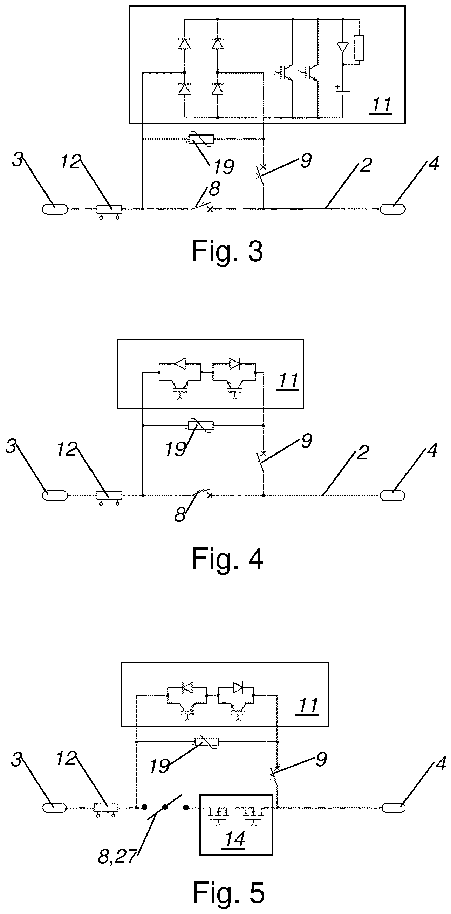

Die Fig. 3 bis 5 zeigen jeweils unterschiedliche Ausführungsformen der Außenleiterstrecke eines Niederspannungs-Schutzschaltgerät 1 mit mindestens einer Außenleiterstrecke 2 von einem Außenleiterversorgungsanschluss 3 des Niederspannungs-Schutzschaltgeräts 1 zu einem Außenleiterlastanschluss 4 des Niederspannungs-Schutzschaltgeräts 1, und einer Neutralleiterstrecke 5 von einem Neutralleiteranschluss 6 des Niederspannungs-Schutzschaltgeräts 1 zu einem Neutralleiterlastanschluss 7 des Niederspannungs-Schutzschaltgeräts 1, wobei in der Außenleiterstrecke 2 ein mechanischer Bypassschalter 8 angeordnet ist, wobei eine erste Halbleiterschaltungsanordnung 11 des Niederspannungs-Schutzschaltgeräts 1 parallel zum Bypassschalter 8 geschaltet ist, wobei in der Außenleiterstrecke 2 eine Strommessanordnung 12 angeordnet ist, welche mit einer elektronischen Steuereinheit 13 des Schutzschaltgeräts 1 verbunden ist, wobei die elektronische Steuereinheit 13 dazu ausgebildet ist, den Bypassschalter 8 und die erste Halbleiterschaltungsanordnung 11 bei Detektion eines vorgebbaren Überstromes, insbesondere eines Kurzschlussstromes, durch die Strommessanordnung 12 anzusteuern, wobei seriell zur ersten Halbleiterschaltungsanordnung 11 sowie parallel zum Bypassschalter 8 ein erster mechanischer Trennschalter 9 angeordnet bzw. geschaltet ist.

Dadurch kann ein Niederspannungs-Schutzschaltgerät 1 gebildet werden, welches einen geringen Innenwiderstand aufweist, wodurch selbst bei hoher Dauerstrombelastung die Eigenerwärmung des Niederspannungs-Schutzschaltgeräts 1 gering bleiben. Durch die geringe Erwärmung kann auch die Baugröße des Niederspannungs-Schutzschaltgeräts 1 gering gehalten werden. Aufgrund der geringen Eigenerwärmung des Niederspannungs-Schutzschaltgeräts 1 können die Innentemperaturen gering gehalten werden, wodurch die Lebensdauer der Halbleiter in dem Niederspannungs-Schutzschaltgerät 1 und entsprechend die Zuverlässigkeit des Niederspannungs-Schutzschaltgeräts 1 vergrößert werden.

Bei dem gegenständlichen Niederspannungs-Schutzschaltgerät 1 wie auch dem Schutzschaltgerät gemäß der WO 2015/028634 A1 handelt es sich um Niederspannungs-Schutzschaltgeräte. Als Niederspannung wird wie an sich üblich der Bereich bis 1000V Wechselspannung bzw. 1500V Gleichspannung bezeichnet.

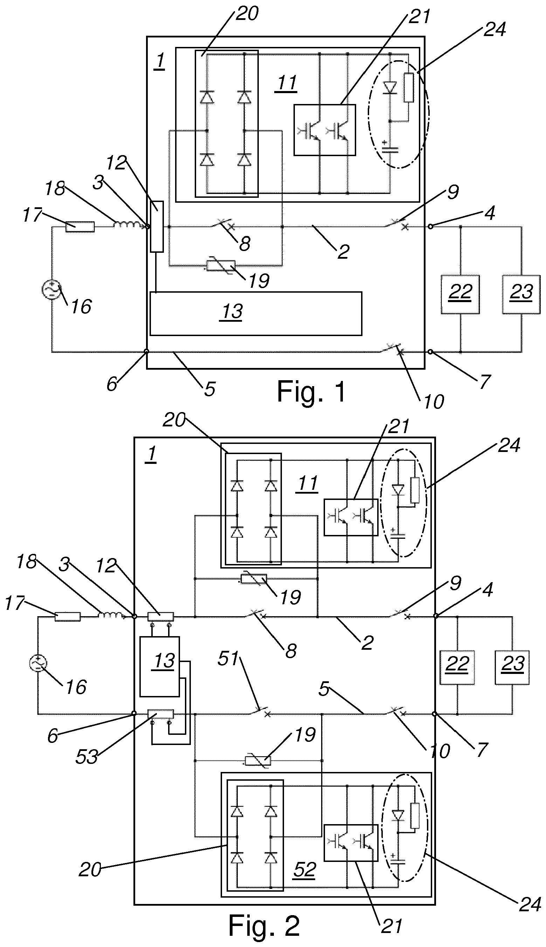

Fig. 1 zeigt ein Schutzschaltgerät gemäß dem Stand der Technik, wie dieses etwa in der WO 2015/028634 A1 beschrieben ist. Dieses weist, wie auch das Schutzschaltgerät 1 gemäß Fig. 2 eine Außenleiterstrecke 2 sowie eine Neutralleiterstrecke 5 auf. Die Außenleiterstrecke 2 verläuft durch das Schutzschaltgerät 1 von einem Außenleiterversorgungsanschluss 3 zu einem Außenleiterlastanschluss 4. Die Neutralleiterstrecke 5 verläuft durch das Schutzschaltgerät 1 von einem Neutralleiteranschluss 6 zu einem Neutralleiterlastanschluss 7. Die betreffenden Anschlüsse 3, 4, 6, 7 sind jeweils bevorzugt als Schraubanschlussklemmen bzw. Steckanschlussklemmen ausgebildet, und in dem Schutzschaltgerät 1 von außen zugänglich angeordnet.

Das Schutzschaltgerät 1 weist bevorzugt ein Isolierstoffgehäuse auf.

In der Außenleiterstrecke 2 ist ein herkömmlicher mechanischer Bypassschalter 8 mit einfacher Kontaktunterbrechung angeordnet. Bei dem Schalter gemäß dem Stand der Technik ist, wie dargestellt, in der Außenleiterstrecke 2 weiters ein erster mechanischer Trennschalter 9 seriell zum Bypassschalter 8 angeordnet. In der Neutralleiterstrecke 5 ist ein zweiter mechanischer Trennschalter 10 angeordnet. Parallel zum Bypassschalter 8 ist eine Halbleiterschaltungsanordnung 11 geschaltet.

Weiters ist parallel zum Bypassschalter 8 ein Überspannungsableiter 19 geschaltet.

Das Schutzschaltgerät 1 weist weiters eine Strommessanordnung 12 auf, welche in der Außenleiterstrecke 2 angeordnet ist, und welche bevorzugt umfassend einem Shunt-Widerstand ausgebildet ist.

Die Strommessanordnung 12 ist mit einer elektronischen Steuereinheit 13 des Schutzschaltgeräts 1 verbunden, welche bevorzugt umfassend einen Mikrocontroller bzw. Mikroprozessor ausgebildet ist. Die elektronische Steuereinheit 13 ist dazu ausgebildet, den Bypassschalter 8 und die erste Halbleiterschaltungsanordnung 11, sowie den ersten mechanischen Trennschalter 9 und den zweiten mechanischen Trennschalter 10, anzusteuern, daher diese vorgebbar zu betätigen bzw. zu schalten. Hiezu ist die elektronische Steuereinheit 13 mit der ersten Halbleiterschaltungsanordnung 11, sowie weiters mit, insbesondere elektromagnetischen, Betätigungselementen der mechanischen Schalter, daher des Bypassschalters 8, des ersten mechanischen Trennschalters 9 und des zweiten mechanischen Trennschalters 10 bevorzugt schaltungstechnisch verbunden. Die entsprechenden Verbindungen ausgehend von der elektronischen Steuereinheit 13 sind nicht in den Fig. 1 und 2 dargestellt.

Die erste Halbleiterschaltungsanordnung 11 weist bevorzugt eine Gleichrichterschaltung 20, welche bevorzugt als Vollbrücke ausgebildet ist, sowie, bei der gegenständlichen Ausführungsform zwei Leistungshalbleiter 21, welche gegenständlich als IGBT ausgebildet sind, als eigentliche Schalt- bzw. Regelelemente auf. Dabei kann auch ein größerer Leistungshalbleiter 21 vorgesehen sein.

In den Fig. 1 und 2 sind neben dem eigentlichen Schutzschaltgerät 1 weites die elektrische Umgebung angedeutet. Dabei ist das Versorgungsnetz durch die AC/DC-Netzspannungsquelle 16, den Netzinnenwiderstand 17 und die Netzinduktivität 18 dargestellt. Weiters ist eine elektrische Last 23, sowie ein elektrischer Fehler 22 in Form eines Kurzschlusses dargestellt.

Beim einem Schaltgerät gemäß dem Stand der Technik, wie in Fig. 1 gezeigt, ist vorgesehen, dass ein Abschaltvorgang von dem Bypassschalter 8 und der ersten Halbleiterschaltungsanordnung 11 durchgeführt wird, und die ersten und zweiten Trennschalter 9, 10 lediglich dazu dienen, nach erfolgter Abschaltung eine galvanische Trennung des Lastkreises sicherzustellen.

Das Niederspannungs-Schutzschaltgerät 1 gemäß Fig. 2 entspricht im Wesentlichen dem Niederspannungs-Schutzschaltgerät 1 gemäß Fig. 1, wobei dieses zweipolig ausgebildet ist. Dieses weist einen zweiten Bypassschalter 51, eine dritte Halbleiterschaltungsanordnung 52 sowie eine zweite Strommessanordnung 53 auf.

Ein gegenständliches Niederspannungs-Schutzschaltgerät 1 entspricht bevorzugt bis auf die dargelegten Unterschiede einem Niederspannungs-Schutzschaltgerät gemäß Fig. 1 oder 2. Bei zweipoligen Ausführungen eines gegenständlichen Niederspannungs-Schutzschaltgeräts 1 ist die als Neutralleiterstrecke 5 bezeichnete Schaltstrecke bzw. schaltungstechnische Verbindung durch das Niederspannungs-Schutzschaltgeräts 1 entsprechend der beschriebenen Außenleiterstrecke 2 ausgebildet bzw. auszubilden.

Im Gegensatz zu den Niederspannungs-Schutzschaltgeräten 1 gemäß Fig. 1 und 2 ist bei den gegenständlichen Niederspannungs-Schutzschaltgeräten 1 vorgesehen, dass der erste mechanische Trennschalter 9 schaltungstechnisch seriell zur ersten Halbleiterschaltungsanordnung 11 im Parallelzweig der ersten Halbleiterschaltungsanordnung 11, daher gleichzeitig parallel zum Bypassschalter 8, angeordnet ist. Bevorzugte Ausführungsformen wesentlicher Teiles solcher Niederspannungs-Schutzschaltgeräte 1 sind in den Fig. 3, 4 und 5 dargestellt. Bei dieser Anordnung kann der erste mechanische Trennschalter 9 mechanisch deutlich einfacher ausgebildet werden, als bei den Niederspannungs-Schutzschaltgeräten 1 gemäß den Fig. 1 oder 2, da dieser nur im Zuge eines Schaltvorganges stromdurchflossen wird. Gleichzeitig ist der Bypassschalter 8 zur Gewährleistung eines galvanischen Trennung auszubilden, insbesondere mit entsprechend vergrößertem Kontaktabstand im geöffnetem Zustand.

Bevorzugt ist vorgesehen, dass die elektronische Steuereinheit 13 weiterhin dazu ausgebildet ist, den ersten mechanischen Trennschalter 9 zu betätigen.

Ebenso ist bevorzugt vorgesehen, dass in der Neutralleiterstrecke 5 ein zweiter mechanischer Trennschalter 10 angeordnet ist, und dass die elektronische Steuereinheit 13 vorzugsweise dazu ausgebildet ist, den zweiten mechanischen Trennschalter 10 zu betätigen. Weiters ist parallel zum Bypassschalter 8 sowie der ersten Halbleiterschaltungsanordnung 11 sowie seriell zum ersten Trennschalter 9 bevorzugt ein Überspannungsableiter 19, insbesondere ein Varistor, vorzugsweise ein MOV, schaltungstechnisch angeordnet. MOV steht dabei für Metall Oxide Varistor.

Die Ausführungsformen gemäß den Fig. 3 und 4 unterscheiden sich lediglich hinsichtlich der Ausbildung der ersten Halbleiterschaltungsanordnung 11. Die gegenständliche erfindungsgemäße Anordnung des ersten Trennschalters 9 ist daher mit unterschiedlich ausgebildeten ersten Halbleiterschaltungsanordnungen 11 möglich.

Bei einem gegenständlichen Niederspannungs-Schutzschaltgerät 1 ist bevorzugt vorgesehen, dass der Bypassschalter 8 als Schalter 27 mit Mehrfachunterbrechung ausgebildet ist. Das Bezugszeichen 27 bezeichnet dabei den Schalter mit Mehrfachunterbrechung, welcher die Funktion des Bypassschalters 8 erfüllt. Weiters ist bevorzugt vorgesehen, dass in der Außenleiterstrecke 2 eine zweite Halbleiterschaltungsanordnung 14 schaltungstechnisch seriell zum Bypassschalter 8 und parallel zur ersten Halbleiterschaltungsanordnung 11 angeordnet ist. Dabei ist auch der Überspannungsableiter 19 parallel zum Bypassschalter 8 und der zweite Halbleiterschaltungsanordnung 14 geschaltet. Die zweite Halbleiterschaltungsanordnung 14 ist ebenfalls von der elektronische Steuereinheit 13 angesteuert.

Durch die Mehrfachunterbrechung beim Bypassschalter 8 kann schneller ein für die Abschaltung eines Kurzschlusses erforderlicher Kontaktabstand erreicht werden. Durch die Mehrfachunterbrechung kann das Volumen und die Masse des Bypassschalters 8 verringert werden. Dadurch kann die Massenträgheit der bewegten Teile und die Kontaktöffnungszeit verringert werden. Durch die Verringerung der Kontaktöffnungszeit kann schneller der erforderliche sichere Kontaktabstand erreicht werden, um ein Abschalten eines Kurzschlussstromes durch die Leistungshalbleiter 21 der ersten Halbleiterschaltungsanordnung 11 zu ermöglichen. Dadurch kann die Belastung der ersten Halbleiterschaltungsanordnung 11 verringert werden, welche während der Zeit, welche der Bypassschalter 8 zum Erreichen des sicheren Kontaktabstandes benötigt, um ein erneutes Zünden des Lichtbogens an den Kontakten des Bypassschalters 8 zu verhindern, einer sehr hohen Belastung ausgesetzt sind. Durch das schnellere Erreichen dieses sicheren Abstandes der Kontakte des Bypassschalters 8 können weiters in der ersten Halbleiterschaltungsanordnung 11 geringer maximal-belastbare Leistungshalbleiter 20, 21 vewendet werden. Derartige Leistungshalbleiter 20, 21 weisen sowohl einen geringeren Innenwiderstand, als auch eine geringere physische Baugröße auf, als höher belastbare Leistungshalbleiter 20, 21. Durch die geringere Baugröße, insbesondere die kürzeren Wege innerhalb der Leistungshalbleiter 21 kann die relevante Schleifeninduktanz des Niederspannungs-Schutzschaltgeräts 1 verringert werden, wodurch weiters direkt die Kommutierungszeit des Kurzschlussstromes auf die erste Halbleiterschaltungsanordnung 11 verringert werden kann. Durch den geringeren Innenwiderstand wird die Kommutierungszeit weiters verringert.

Allerdings hat sich gezeigt, dass bei realen Ausführungen des Bypassschalters 8 mit Mehrfachunterbrechung die Kontakte niemals ganz genau gleichzeitig öffnen. Bei zeitlich sehr fein aufgelöster Beobachtungszeit konnte festgestellt werden, dass in der Regel eines der Kontaktpaare aus beweglichem und bevorzugt gehäusefestem Kontakt den Öffnungs- bzw- Trennungsvorgang vor dem wenigstens einen weiteren Kontaktpaar begingt. Dadurch muss während dieser Zeitspanne der gesamte, sich aufbauende bzw. ansteigende Kurzschlussstrom von lediglich einem Kontaktpaar getragen werden, welches dazu jedoch nicht ausgelegt ist. Dies führt nicht nur zu einer hohen Belastung dieses Kontaktpaares, sondern weiters zu einer Verschlechterung bzw. Verlängerung der Kommutierungszeit und folglich auch zu einer Vergrößerung der Belastung der Leistungshalbleiter 20, 21 der ersten Halbleiterschaltungsanordnung 11.

Durch die zweite Halbleiterschaltungsanordnung 14 kann sowohl die Belastung des Bypassschalters 8 als auch der ersten Halbleiterschaltungsanordnung 11 verringert werden. Dadurch kann erreicht werden, dass der Strom bereits bei deutlich geringerer Stromstärke als bei herkömmlichen Schutzschaltgeräten gemäß Fig. 1 auf die erste Halbleiterschaltungsanordnung 11 kommutiert, wodurch die Belastung der ersten Halbleiterschaltungsanordnung 11 verringert und deren Lebensdauer vergrößert werden kann. Dadurch stellen die Unterschiede im zeitlichen Öffnen der Kontakte des Bypassschalters 8 kein Problem dar. Dadurch kann das Auftreten eines Lichtbogens an dem Bypassschalter 8 im Wesentlichen gänzlich vermieden werden, wodurch die Belastung der entsprechenden Schaltkontakte verringert und deren Lebensdauer vergrößert werden kann. Dadurch können die Vorteile der Mehrfachunterbrechung am Bypassschalter 8 ohne Beeinträchtigung durch dessen Eigenheiten ausgenutzt werden.

Durch die gegenständlichen Maßnahmen können weitere Vorteile erzielt werden. Da beim Abschalten kein Lichtbogen auftritt, muss auch kein Lichtbogen gelöscht werden. Es entstehen keine heißen ionisierten Gase, welche erst gekühlt werden müsste, um ein erneutes Zünden eines Lichtbogens zu verhindern. Dadurch kann sowohl die Belastbarkeit der ersten Halbleiterschaltungsanordnung 11 reduziert werden, als auch der gesamte Abschaltvorgang weiter beschleunigt werden, da ein erneutes Zünden eines Lichtbogens gegenständlich nicht mehr zu befürchten ist. Alternativ kann auch die Belastbarkeit der ersten Halbleiterschaltungsanordnung 11 unverändert bleiben und die Öffnungsgeschwindigkeit des Bypassschalters 8 reduziert werden, wodurch dieser einfacher ausgebildet werden kann.

Durch das schnelle Abschalten eines Kurzschluss- bzw- Überlaststromes wird weniger Energie als sonst in Form von Streuinduktivitäten bzw. in der Netzinduktanz gespeichert, wodurch der Überspannungsableiter 19 sowie der Snubber 24 geschont wird. Dieser kann aufgrund weiterer Effekte auch kleiner dimensioniert werden.

Da kein Schaltlichtbogen auftritt, ist der Spannungsabfall an der ersten Halbleiterschaltungsanordnung 11 nicht durch die Lichtbogenspannung limitiert.

Der Schalter 27 mit Mehrfachunterbrechung weist wenigstens eine Doppelunterbrechung auf, wobei bevorzugt vorgesehen ist, dass der Schalter 27 mit Mehrfachunterbrechung umfassend wenigstens eine bewegliche Schaltbrücke mit wenigstens einem ersten und wenigstens einem zweiten beweglichen Kontakt ausgebildet ist. Der Schalter 27 ist in Fig. 5 schematisch dargestellt. Dabei kann weiters auch vorgesehen sein, dass der Schalter 27 mit Mehrfachunterbrechung auch eine Dreifachunterbrechung, eine Vierfachunterbrechung bzw. eine Fünffachunterbrechung aufweist. Schalter 27 mit Mehrfachunterbrechung und beweglichen Schaltbrücken sind an sich bekannt, weshalb gegenständlich nicht näher darauf eingegangen wird.

Die elektronische Steuereinheit 13 ist dazu vorgesehen bzw. entsprechend ausgebildet, den Bypassschalter 8, den ersten mechanischen Trennschalter 9, den zweiten mechanischen Trennschalter 10, die erste Halbleiterschaltungsanordnung 11 und die zweite Halbleiterschaltungsanordnung 14 bei Detektion eines vorgebbaren Überstromes, insbesondere eines Kurzschlussstromes, durch die Strommessanordnung 12 anzusteuern, um ein Abschalten des Schutzschaltgeräts 1 zu verursachen. Dabei ist bevorzugt vorgesehen, dass die elektronische Steuereinheit 13 dazu ausgebildet ist, bei Detektion eines Kurzschlussstromes durch die Strommessanordnung 12 erst die erste Halbleiterschaltungsanordnung 11 einzuschalten, im Wesentlichen unmittelbar nachfolgend die zweite Halbleiterschaltungsanordnung 14 zu sperren, im Wesentlichen unmittelbar nachfolgenden den Bypassschalter 8 zu öffnen, nachfolgend, insbesondere sobald der Bypassschalter 8 genug geöffnet hat, die erste Halbleiterschaltungsanordnung 11 in den nicht-leitenden Zustand zu steuern, und nachfolgend, insbesondere sobald der Strom nahezu Null ist, den ersten mechanischen Trennschalter 9 zu öffnen. Nachfolgend wird bevorzugt der zweite mechanische Trennschalter 10 geöffnet. Durch den Betrieb in dieser Reihenfolge kann erreicht werden, dass der Strom bereits auf die erste Halbleiterschaltungsanordnung 11 kommutiert, wenn dieser noch sehr klein ist, wobei kein entsprechender Abfall, verbunden mit einem Lichtbogen an dem Bypassschalter 8 erforderlich ist. Die Mehrfachkontakte des Bypassschalters 8 öffnen daher bereits im stromlosen Zustand, weshalb kein Lichtbogen auftritt, und es aufgrund der unterschiedlichen Kontaktöffnung zu keinen Problemen kommt.

Nach dem Abschalten der IGBTs 21 wird die Spannung wegen der im Netz gespeicherten Energie steigen. Die steigende Spannung wird vom Überspannungsableiter 19 geleitet, welcher den Strom begrenzt. Wenn der Strom klein genug ist, werden der erste und zweite mechanische Trennschalter 9, 10 geöffnet.

Bevorzugt ist vorgesehen, dass die zweite Halbleiterschaltungsanordnung 14 bidirektional ausgebildet ist. Besonders bevorzugt ist die zweite Halbleiterschaltungsanordnung 14 als vier Quadranten-Schaltung ausgebildet, für beide Stromrichtungen und beide Spannungspolaritäten.

Weiters ist bevorzugt vorgesehen, dass die zweite Halbleiterschaltungsanordnung 14 umfassend Niederspanungs-MOSFET 15 ausgebildet ist. Die zweite Halbleiterschaltungsanordnung 14 befindet sich ständig im Stromfluss, weshalb der Innenwiderstand derselben relevant ist, um eine zu große Verlustleistung an dieser Stelle zu vermeiden. Nach dem Abschalten der zweiten Halbleiterschaltungsanordnung 14 kommutiert der Strom auf die erste Halbleiterschaltungsanordnung 11. Der Spannungsabfall über die zweite Halbleiterschaltungsanordnung 14 beträgt dabei lediglich einige Volt. Beim Ausschalten der ersten Halbleiterschaltungsanordnung 11 ist darauf zu achten, dass die Schaltkontakte des Bypassschalters 8, 27, bereits genügend Kontaktabstand erreicht haben, dass an der zweiten Halbleiterschaltungsanordnung 14 keine Spannung mehr anliegt.

Bevorzugt sind die Niederspanungs-MOSFET 15 als 20-30V MOSFET gewählt, aufgrund deren sehr geringen Innenwiderstandes, sowie um die Verlustleitung im regulären Betrieb gering zu halten. Der Spannungsabfall an den Niederspanungs-MOSFET 15 dient lediglich dazu den Strom zum Kommutieren auf die erste Halbleiterschaltungsanordnung 11 zu bringen.

Aufgrund der "intrinsic body diode" und Betrieb der MOSFET im dritten Quadranten sind lediglich zwei derartige Niederspanungs-MOSFET 15 für einen bidirektionalen Schalter erforderlich. Durch die hohe Leitfähigkeit können hohe Ströme bei geringen Gate-Spannungen erreicht werden.

Die erste Halbleiterschaltungsanordnung 11 ist entsprechend belastbar ausgebildet, um die hohen Ströme und Spannungsspitzen bei einem Kurzschluss zu schalten. Die erste Halbleiterschaltungsanordnung 11 kann ausgeschaltet werden, sobald die Kontakte des Bypassschalters 8, 27 genügend Kontaktabstand aufweisen.

Die MOSFET 15 weisen jeweils bevorzugt eine Antiparallel-Diode auf, welche auch als Monolithic Body Diode bezeichnet wird.

Beim Einschalten eines ausgeschalteten Niederspannungs-Schutzschaltgeräts 1 kann dieses zuvor aufgrund einer Kurzschlussabschaltung ausgeschaltet worden sein, sodass die Kontakte des Bypassschalters 8 geöffnet sind. Dabei kann der betreffende elektrische Fehler weiterhin vorhanden sein. Beim Schließen der Schaltkontakte des Bypassschalters 8 kommt es in der Regel zu einem sog. Prellen der Kontakte. Dabei wird jeweils kurzzeitig eine leitende Verbindung hergestellt und wieder unterbrochen bis ein mechanisch stabiler Zustand erreicht wird. Dies führt, vor allem bei bestehendem Kurzschluss zu einer hohen Belastung der Kontakte. Weiters besteht insbesondere beim Einschalten des Niederspannungs-Schutzschaltgeräts 1 bei bestehendem Kurzschluss die Gefahr der Beschädigung der zweiten Halbleiterschaltungsanordnung 14.

Bevorzugt ist daher vorgesehen, dass die elektronische Steuereinheit 13 dazu ausgebildet ist, beim Einschalten des ausgeschalteten Niederspannungs-Schutzschaltgeräts 1 bei geöffnetem Bypassschalter 8 und gesperrter erster und zweiter Halbleiterschaltungsanordnung 11, 14, vorzugsweise erst den zweiten mechanischen Trennschalter 10 zu schließen, nachfolgend den ersten mechanischen Trennschalter 9 zu schließen, bei Wechselstrom insbesondere bei einem Nulldurchgang der Netzspannung, nachfolgend nach zumindest einer vorgebbaren ersten Zeitdauer die erste Halbleiterschaltungsanordnung 11 einzuschalten, im Wesentlichen unmittelbar nachfolgend den Bypassschalter 8 zu schließen, nach einer vorgebbaren zweiten Zeitdauer, bei Wechselstrom insbesondere beim nächsten Nulldurchgang der Netzspannung, die zweite Halbleiterschaltungsanordnung 14 einzuschalten und im Wesentlichen unmittelbar nachfolgend die erste Halbleiterschaltungsanordnung 11 auszuschalten und den ersten mechanischen Trennschalter 9 geschlossen zu halten.

Bevorzugt ist weiters vorgesehen, dass die elektronische Steuereinheit 13 dazu ausgebildet ist, beim Ausschalten des eingeschalteten Niederspannungs-Schutzschaltgeräts 1 mit geschlossenem ersten mechanischen Trennschalter 9 erst die erste Halbleiterschaltungsanordnung 11 einzuschalten, nachfolgend die zweite Halbleiterschaltungsanordnung 14 auszuschalten, nachfolgend den Bypassschalter 8 zu öffnen und die erste Halbleiterschaltungsanordnung 11 abzuschalten, und nachfolgend, insbesondere sobald detektiert wurde, dass der Strom über den ersten Trennschalter 9 annähernd auf null gesunken ist, den ersten mechanischen Trennschalter 9 zu öffnen.

Die erste Zeitdauer ist dabei derart lange, dass Schaltkontakte des ersten mechanischen Trennschalters 9, sowie vorzugsweise Schaltkontakte des zweiten mechanischen Trennschalters 10, einen mechanisch stationären Zustand erreicht haben. Beim Einschalten eines Gleichstromes ist es ausreichend diese Zeit abzuwarten.

Zum Einschalten eines Wechselstromes ist bevorzugt vorgesehen, dass die elektronische Steuereinheit 13 dazu ausgebildet ist, nach Ablauf der ersten Zeitdauer die zweite Halbleiterschaltungsanordnung 14 beim nächsten Nulldurchgang der anliegenden Spannung einzuschalten. Zur Detektion des Nulldurchganges der anliegenden Spannung weist das Niederspannungs-Schutzschaltgerät 1 eine Spannungsmessanordnung 29 auf, welches mit der Steuereinheit 13 verbunden ist.

Die zweite Zeitdauer ist derart lange, dass Schaltkontakte des Bypassschalters 8 einen mechanisch stationären Zustand erreicht haben.

Durch die vorgenannten Maßnahmen kann das Niederspannungs-Schutzschaltgerät 1 eingeschaltet werden, ohne die einzelnen Bauteile übermäßigen Belastungen auszusetzen.

Durch die gegenständlichen Maßnahmen ergibt sich als weiterer Vorteil, dass es bei einem Schaltvorgang bei einem Defekt der ersten Halbleiterschaltungsanordnung 11 nicht zu einem Brand des Niederspannungs-Schutzschaltgeräts 1 kommt. Bei einem Niederspannungs-Schutzschaltgerät 1 gemäß Fig. 1 würde in diesem Fall der Bypassschalter 8 öffnen, woraufhin der entstehende Lichtbogen zu einem Brand des Bypassschalters 8 und folglich des gesamten Niederspannungs-Schutzschaltgeräts 1 führen würde. Dies ist bei dem gegenständlichen Niederspannungs-Schutzschaltgerät 1 gemäß Fig. 2 nicht der Fall. Aufgrund eines Avalanche- oder Lawinendurchbruches des bzw. der MOSFET 15 öffnet der Bypassschalter 8, 27 weiterhin ohne Lichtbogen, sodass ein Brand vermieden werden kann. Da es dabei zu einer Zerstörung der zweiten Halbleiterschaltungsanordnung 14 kommen kann, ist die zweite Halbleiterschaltungsanordnung 14 bevorzugt in einem Schutzgehäuse, insbesondere einem Metallgehäuse, innerhalb des Niederspannungs-Schutzschaltgeräts 1 gekapselt angeordnet.

## Patentansprüche

1. Niederspannungs-Schutzschaltgerät (1) mit mindestens einer Außenleiterstrecke (2) von einem Außenleiterversorgungsanschluss (3) des Niederspannungs-Schutzschaltgeräts (1) zu einem Außenleiterlastanschluss (4) des Niederspannungs-Schutzschaltgeräts (1), und einer Neutralleiterstrecke (5) von einem Neutralleiteranschluss (6) des Niederspannungs-Schutzschaltgeräts (1) zu einem Neutralleiterlastanschluss (7) des Niederspannungs-Schutzschaltgeräts (1), wobei in der Außenleiterstrecke (2) ein mechanischer Bypassschalter (8) angeordnet ist, wobei eine erste Halbleiterschaltungsanordnung (11) des Niederspannungs-Schutzschaltgeräts (1) parallel zum Bypassschalter (8) geschaltet ist, wobei in der Außenleiterstrecke (2) eine Strommessanordnung (12) angeordnet ist, welche mit einer elektronischen Steuereinheit (13) des Schutzschaltgeräts (1) verbunden ist, wobei die elektronische Steuereinheit (13) dazu ausgebildet ist, den Bypassschalter (8) und die erste Halbleiterschaltungsanordnung (11) bei Detektion eines vorgebbaren Überstromes, insbesondere eines Kurzschlussstromes, durch die Strommessanordnung (12) anzusteuern, **dadurch gekennzeichnet, dass** seriell zur ersten Halbleiterschaltungsanordnung (11) sowie parallel zum Bypassschalter (8) ein erster mechanischer Trennschalter (9) angeordnet ist, dass in der Außenleiterstrecke (2) eine zweite Halbleiterschaltungsanordnung (14) schaltungstechnisch seriell zum Bypassschalter (8) und parallel zur ersten Halbleiterschaltungsanordnung (11) angeordnet ist, und dass die elektronische Steuereinheit (13) dazu ausgebildet ist, bei Detektion eines Kurzschluss- und/oder Überlaststromes durch die Strommessanordnung (12) erst die erste Halbleiterschaltungsanordnung (11) einzuschalten, nachfolgend die zweite Halbleiterschaltungsanordnung (14) zu sperren, nachfolgenden den Bypassschalter (8) zu öffnen, nachfolgend die erste Halbleiterschaltungsanordnung (11) in den nicht-leitenden Zustand zu steuern, und nachfolgend ist den ersten mechanischen Trennschalter (9) zu öffnen.

2. Niederspannungs-Schutzschaltgerät (1) nach Anspruch 1, **dadurch gekennzeichnet, dass** die elektronische Steuereinheit (13) dazu ausgebildet ist, den ersten mechanischen Trennschalter (9) zu betätigen.

3. Niederspannungs-Schutzschaltgerät (1) nach Anspruch 1 oder 2, **dadurch gekennzeichnet, dass** in der Neutralleiterstrecke (5) ein zweiter mechanischer Trennschalter (10) angeordnet ist, und dass die elektronische Steuereinheit (13) vorzugsweise dazu ausgebildet ist, den zweiten mechanischen Trennschalter (10) zu betätigen.

4. Niederspannungs-Schutzschaltgerät (1) nach einem der Ansprüche 1 bis 3, **dadurch gekennzeichnet, dass** parallel zum Bypassschalter (8) sowie der ersten Halbleiterschaltungsanordnung (11) sowie seriell zum ersten Trennschalter (9) ein Überspannungsableiter (19), insbesondere ein MOS-Varistor, schaltungstechnisch angeordnet ist.

5. Niederspannungs-Schutzschaltgerät (1) nach einem der Ansprüche 1 bis 4, **dadurch gekennzeichnet, dass** der Bypassschalter (8) als Schalter (27) mit Mehrfachunterbrechung ausgebildet ist.

6. Niederspannungs-Schutzschaltgerät (1) nach Anspruch 5, **dadurch gekennzeichnet, dass** der Schalter (27) mit Mehrfachunterbrechung umfassend wenigstens eine bewegliche Schaltbrücke mit wenigstens einem ersten und wenigstens einem zweiten beweglichen Kontakt ausgebildet ist.

7. Niederspannungs-Schutzschaltgerät (1) nach einem der Ansprüche 1 bis 6, **dadurch gekennzeichnet, dass** die zweite Halbleiterschaltungsanordnung (14) bidirektional, insbesondere als bidirektionaler 4-Quadrantennschalter, ausgebildet ist.

8. Niederspannungs-Schutzschaltgerät (1) nach einem der Ansprüche 1 bis 7, **dadurch gekennzeichnet, dass** die zweite Halbleiterschaltungsanordnung (14) umfassend Niederspanungs-MOSFET ausgebildet ist.

9. Niederspannungs-Schutzschaltgerät (1) nach einem der Ansprüche 1 bis 8, **dadurch gekennzeichnet, dass** die elektronische Steuereinheit (13) dazu ausgebildet ist, beim Einschalten des ausgeschalteten Niederspannungs-Schutzschaltgeräts (1) bei geöffnetem Bypassschalter (8) und gesperrter erster und zweiter Halbleiterschaltungsanordnung (11, 14), erst den ersten mechanischen Trennschalter (9) zu schließen, nachfolgend nach zumindest einer vorgebbaren ersten Zeitdauer die erste Halbleiterschaltungsanordnung (11) einzuschalten, im Wesentlichen unmittelbar nachfolgend den Bypassschalter (8) zu schließen, nach einer vorgebbaren zweiten Zeitdauer die zweite Halbleiterschaltungsanordnung (14) einzuschalten und im Wesentlichen unmittelbar nachfolgend die erste Halbleiterschaltungsanordnung (11) auszuschalten und den ersten mechanischen Trennschalter (9) geschlossen zu halten.

10. Niederspannungs-Schutzschaltgerät (1) nach einem der Ansprüche 1 bis 9, **dadurch gekennzeichnet, dass** die elektronische Steuereinheit (13) dazu ausgebildet ist, beim Ausschalten des eingeschalteten Niederspannungs-Schutzschaltgeräts (1) mit geschlossenem ersten mechanischen Trennschalter (9) erst die erste Halbleiterschaltungsanordnung (11) einzuschalten, nachfolgend die zweite Halbleiterschaltungsanordnung (14) auszuschalten, nachfolgend den Bypassschalter (8) zu öffnen und die erste Halbleiterschaltungsanordnung (11) abzuschalten, und nachfolgend den ersten mechanischen Trennschalter (9) zu öffnen.

11. Niederspannungs-Schutzschaltgerät (1) nach Anspruch 9 oder 10, **dadurch gekennzeichnet, dass** die erste Zeitdauer derart lange ist, dass Schaltkontakte des ersten mechanischen Trennschalters (9), sowie vorzugsweise Schaltkontakte des zweiten mechanischen Trennschalters (10), einen mechanisch stationären Zustand erreicht haben.

12. Niederspannungs-Schutzschaltgerät (1) nach einem der Ansprüche 9 bis 11, **dadurch gekennzeichnet, dass** die elektronische Steuereinheit (13) dazu ausgebildet ist, beim Einschalten eines Wechselstromes nach Ablauf der ersten Zeitdauer die zweite Halbleiterschaltungsanordnung (14) beim nächsten Nulldurchgang der anliegenden Spannung einzuschalten.

13. Niederspannungs-Schutzschaltgerät (1) nach einem der Ansprüche 9 bis 12 **dadurch gekennzeichnet, dass** die zweite Zeitdauer derart lange ist, dass Schaltkontakte des Bypassschalters (8) einen mechanisch stationären Zustand erreicht haben.

## Claims

1. Low-voltage circuit breaker device (1) comprising at least one outer conductor path (2) from an outer conductor supply connection (3) of the low-voltage circuit breaker device (1) to an outer conductor load connection (4) of said low-voltage circuit breaker device (1), and a neutral conductor path (5) from a neutral conductor connection (6) of the low-voltage circuit breaker device (1) to a neutral conductor load connection (7) of said low-voltage circuit breaker device (1), wherein a mechanical bypass switch (8) is arranged in said outer conductor path (2), wherein a first semiconductor circuit arrangement (11) of the low-voltage circuit breaker device (1) is connected in parallel to the bypass switch (8), wherein a current measuring arrangement (12) is arranged in said outer conductor path (2), which is connected to an electronic control unit (13) of said circuit breaker device (1), wherein the electronic control unit (13) is designed to actuate the bypass switch (8) and the first semiconductor circuit arrangement (11) upon detection of a pre-definable overload current, in particular a short-circuit current, by the current measuring arrangement (12), **characterised in that** a first mechanical disconnector (9) is arranged in series with the first semiconductor circuit arrangement (11) and in parallel to the bypass switch (8), that a second semiconductor circuit arrangement (14) is arranged in the outer conductor path (2) in terms of circuitry in series with the bypass switch (8) and in parallel to the first semiconductor circuit arrangement (11), and that the electronic control unit (13) is designed to switch on the first semiconductor circuit arrangement (11) only upon detection of a short-circuit current and/or overload current by the current measuring arrangement (12), then to block the second semiconductor circuit arrangement (14), then to open the bypass switch (8), then to control the first semiconductor circuit arrangement (11) into the non-conductive state, and then is to open the first mechanical disconnector (9).

2. Low-voltage circuit breaker device (1) according to claim 1, **characterised in that** the electronic control unit (13) is designed to actuate the first mechanical disconnector (9).

3. Low-voltage circuit breaker device (1) according to claim 1 or 2, **characterised in that** a second mechanical disconnector (10) is arranged in the neutral conductor path (5), and that the electronic control unit (13) is preferably designed to actuate the second mechanical disconnector (10).

4. Low-voltage circuit breaker device (1) according to any one of claims 1 to 3, **characterised in that** a surge arrester (19), in particular, an MOS-Varistor, is arranged in terms of circuitry in parallel to the bypass switch (8) and the first semiconductor circuit arrangement (11) and in series to the first disconnector (9).

5. Low-voltage circuit breaker device (1) according to any one of claims 1 to 4, **characterised in that** the bypass switch (8) is designed as switch (27) with multiple interruption.

6. Low-voltage circuit breaker device (1) according to claim 5, **characterised in that** the switch (27) with multiple interruption is designed comprising at least one movable switching bridge with at least one first and at least one second movable contact.

7. Low-voltage circuit breaker device (1) according to any one of claims 1 to 6, **characterised in that** the second semiconductor circuit arrangement (14) is designed so as to be bidirectional, in particular, as a bidirectional 4-quandrant switch.

8. Low-voltage circuit breaker device (1) according to any one of claims 1 to 7, **characterised in that** the second semiconductor circuit arrangement (14) is designed comprising a low-voltage MOSFET.

9. Low-voltage circuit breaker device (1) according to any one of claims 1 to 8, **characterised in that** the electronic control unit (13) is designed to close the first mechanical disconnector (9) only when the switched-off low-voltage circuit breaker device (1) is switched on when the bypass switch (8) is open and the first and second semiconductor circuit arrangement (11, 14) is blocked, then to switch on the first semiconductor circuit arrangement (11) after at least a pre-definable first time period, substantially immediately subsequently to close the bypass switch (8), after a pre-definable second time period to switch on the second semiconductor circuit arrangement (14) and substantially immediately subsequently to switch off the first semiconductor circuit arrangement (11) and to keep the first mechanical disconnector (9) closed.

10. Low-voltage circuit breaker device (1) according to any one of claims 1 to 9, **characterised in that** the electronic control unit (13) is designed to switch on the first semiconductor circuit arrangement (11) only when the switched on low-voltage circuit breaker device (1) is switched off with closed first mechanical disconnector (9), then to switch off the second semiconductor circuit arrangement (14), then to open the bypass switch (8) and to switch off the first semiconductor circuit arrangement (11), and then to open the first mechanical disconnector (9).

11. Low-voltage circuit breaker device (1) according to claim 9 or 10, **characterised in that** the first time period is of such a length that switching contacts of the first mechanical disconnector (9), and preferably switching contacts of the second mechanical disconnector (10), have reached a mechanically stationary state.

12. Low-voltage circuit breaker device (1) according to any one of claims 9 to 11, **characterised in that** the electronic control unit (13) is designed to switch on the second semiconductor circuit arrangement (14) at the next zero crossing of the applied voltage when an alternating current is switched on after expiry of the first time period.

13. Low-voltage circuit breaker device (1) according to any one of claims 9 to 12, **characterised in that** the second time period is of such a length that switching contacts of the bypass switch (8) have reached a mechanically stationary state.

## Revendications

1. Disjoncteur basse tension (1) comprenant au moins une ligne de conducteur extérieur (2) s'étendant d'une borne d'alimentation de conducteur extérieur (3) du disjoncteur basse tension (1) à une borne de charge de conducteur extérieur (4) du disjoncteur basse tension (1), et une ligne de conducteur neutre (5) s'étendant d'une borne de conducteur neutre (6) du disjoncteur basse tension (1) à une borne de charge de conducteur neutre (7) du disjoncteur basse tension (1), un commutateur de dérivation mécanique (8) étant disposé dans la ligne de conducteur extérieur (2), dans lequel un premier circuit semiconducteur (11) du disjoncteur basse tension (1) est monté en parallèle avec le commutateur de dérivation (8), dans lequel un dispositif de mesure de courant (12) est disposé dans la ligne de conducteur extérieur (2), lequel est connecté à une unité de commande électronique (13) du disjoncteur basse tension (1), dans lequel l'unité de commande électronique (13) est conçue pour commander le commutateur de dérivation (8) et le premier circuit semiconducteur (11) lors de la détection d'une surintensité pouvant être prédéfinie, en particulier d'un courant de court-circuit, par l'intermédiaire du dispositif de mesure de courant (12), **caractérisé en ce qu'**un premier sectionneur mécanique (9) est disposé en série avec le premier circuit semiconducteur (11) et en parallèle avec le commutateur de dérivation (8), **en ce qu'**un deuxième circuit semiconducteur (14) est disposé dans la ligne de conducteur extérieur (2) en série avec le commutateur de dérivation (8) et en parallèle avec le premier circuit semiconducteur (11), et **en ce que** l'unité de commande électronique (13) est conçue, lors de la détection d'un courant de court-circuit et/ou de surintensité par le dispositif de mesure du courant (12), d'abord pour mettre en marche le premier circuit semiconducteur (11), puis pour bloquer le deuxième circuit semiconducteur (14), puis pour ouvrir le commutateur de dérivation (8), puis pour commander le premier circuit semiconducteur (11) à l'état non conducteur, puis pour ouvrir le premier sectionneur mécanique (9).

2. Disjoncteur basse tension (1) selon la revendication 1, **caractérisé en ce que** l'unité de commande électronique (13) est conçue pour actionner le premier sectionneur mécanique (9).

3. Disjoncteur basse tension (1) selon la revendication 1 ou 2, **caractérisé en ce qu'**un deuxième sectionneur mécanique (10) est disposé dans la ligne de conducteur neutre (5) et **en ce que** l'unité de commande électronique (13) est de préférence conçue pour actionner le deuxième sectionneur mécanique (10).

4. Disjoncteur basse tension (1) selon l'une quelconque des revendications 1 à 3, **caractérisé en ce qu'**un parafoudre (19), en particulier une varistance MOS, est monté en parallèle avec le commutateur de dérivation (8) et le premier circuit semiconducteur (11) et en série avec le premier sectionneur (9).

5. Disjoncteur basse tension (1) selon l'une quelconque des revendications 1 à 4, **caractérisé en ce que** le commutateur de dérivation (8) est conçu comme un commutateur (27) à interruption multiple.

6. Disjoncteur basse tension (1) selon la revendication 5, **caractérisé en ce que** le commutateur (27) à interruption multiple est conçu avec au moins un pont de commutation mobile avec au moins un premier et au moins un deuxième contact mobile.

7. Disjoncteur basse tension (1) selon l'une quelconque des revendications 1 à 6, **caractérisé en ce que** le deuxième circuit semiconducteur (14) est conçu de manière bidirectionnelle, en particulier comme un commutateur bidirectionnel à 4 quadrants.

8. Disjoncteur basse tension (1) selon l'une quelconque des revendications 1 à 7, **caractérisé en ce que** ledit deuxième circuit semiconducteur (14) est conçu avec un MOSFET à basse tension.

9. Disjoncteur basse tension (1) selon l'une quelconque des revendications 1 à 8, **caractérisé en ce que** l'unité de commande électronique (13) est conçue pour ne fermer d'abord que le premier sectionneur mécanique (9) lorsque le disjoncteur basse tension (1) est mis en marche avec le commutateur de dérivation (8) ouvert et le premier et le deuxième circuit semiconducteur (11, 14) bloqués, puis pour mettre en marche le premier circuit semiconducteur (11) après au moins une première durée pouvant être prédéfinie, puis pour fermer le commutateur de dérivation (8), pour mettre en marche le deuxième circuit semiconducteur (14) après une deuxième durée pouvant être prédéfinie, puis sensiblement pour immédiatement mettre à l'arrêt le premier circuit semiconducteur (11) et maintenir le premier sectionneur mécanique (9) fermé.

10. Disjoncteur basse tension (1) selon l'une quelconque des revendications 1 à 9, **caractérisé en ce que** l'unité de commande électronique (13) est conçue, lorsque le disjoncteur basse tension (1) mis en marche est arrêté avec le premier sectionneur mécanique (9) fermé, d'abord pour mettre en marche le premier circuit semiconducteur (11), puis pour arrêter le deuxième circuit semiconducteur (14), puis pour ouvrir le commutateur de dérivation (8) et arrêter le premier circuit semiconducteur (11), puis pour ouvrir le premier sectionneur mécanique (9).

11. Disjoncteur basse tension (1) selon la revendication 9 ou 10, **caractérisé en ce que** la première durée est d'une longueur amenant les contacts de commutation du premier sectionneur mécanique (9), et de préférence les contacts de commutation du deuxième sectionneur mécanique (10), à atteindre un état mécaniquement stationnaire.

12. Disjoncteur basse tension (1) selon l'une quelconque des revendications 9 à 11, **caractérisé en ce que** l'unité de commande électronique (13) est conçue pour mettre en marche le deuxième circuit semiconducteur (14) au prochain passage par zéro de la tension appliquée lorsqu'un courant alternatif est mis en marche après l'écoulement de la première durée.

13. Disjoncteur basse tension (1) selon l'une quelconque des revendications 9 à 12, **caractérisé en ce que** la deuxième durée est d'une longueur amenant les contacts de commutation du commutateur de dérivation (8) à atteindre un état mécaniquement stationnaire.
